# EUROPEAN PATENT APPLICATION

(11) **EP 3 640 835 A1**
(43) Date of publication of application: **22.04.2020**
(21) Application number: 19193333.2
(22) Date of filing: 23.08.2019
(51) Int. Cl.: G06K 7/00, G06K 7/10, G06Q 10/08

(54) **WIRELESS TAG READING DEVICE AND WIRELESS TAG READING METHOD**

(30) Priority: 19.10.2018 JP 2018197486
(71) Applicant: Toshiba Tec Kabushiki Kaisha, 141-8562 Tokyo (JP)
(72) Inventor: Yaginuma, Jun, Tokyo, 141-8562 (JP)
(74) Representative: Hoffmann Eitle

(57) **Abstract**

In accordance with an embodiment, a wireless tag reading device comprises an antenna configured to receive a response wave from a wireless tag; a reader configured to acquire identification information from the wireless tag from the response wave; a processor configured to determine a relative movement direction of the wireless tag and the antenna based on a phase of the response wave; and a storage section configured to store identification information for identifying the wireless tag if the movement direction is a first direction.

## Description

### CROSS-REFERENCE TO RELATED APPLICATION

This application is based upon and claims the benefit of priority from Japanese Patent Application No. 2018-197486, filed in October 19, 2018, the entire contents of which are incorporated herein by reference.

### FIELD

Embodiments described herein relate generally to a wireless tag reading device and a wireless tag reading method.

### BACKGROUND

A wireless tag reading device for reading a wireless tag attached to an article or the like reads a wireless tag placed within a predetermined area. In such a wireless tag reading device, a shield for preventing radio waves from an antenna from leaking to the outside is required so as not to read a wireless tag located at the outside of the area.

Therefore, a wireless tag reading device is desired to be capable of reading a desired wireless tag without having a configuration such as a shield.

### SUMMARY OF THE INVENTION

One of the objects of the present invention is to improve prior art techniques and overcome at least some of the prior art problems as for instance above illustrated.

According to a first aspect of the invention, it is provided a wireless tag reading device, comprising: an antenna configured to receive a response wave from a wireless tag; a reader configured to acquire identification information from the wireless tag from the response wave; a processor configured to determine a relative movement direction of the wireless tag and the antenna based on a phase of the response wave; and a storage section configured to store identification information for identifying the wireless tag if the movement direction is a first direction. Optionally, in the wireless tag reading device according to a first aspect of the invention, if the movement direction is a second direction different from the first direction, the processor deletes the identification information for identifying the wireless tag from the storage section.

Optionally, the wireless tag reading device according to the first aspect of the invention further comprises a conveyance mechanism configured to convey the wireless tag in the first direction.

Optionally, the wireless tag reading device according to the first aspect of the invention further comprises a conveyance mechanism configured to convey the wireless tag in the first direction.

Optionally, in the wireless tag reading device according to the first aspect of the invention, the first direction is a direction in which the wireless tag and the antenna approach each other.

Optionally, in the wireless tag reading device according to the first aspect of the invention, the antenna is a directional antenna having directivity in a direction towards the conveyance mechanism.

Optionally, in the wireless tag reading device according to the first aspect of the invention, the first direction is a direction in which a distance between the wireless tag and the antenna decreases.

Optionally, in the wireless tag reading device according to the first aspect of the invention, the second direction is a direction in which a distance between the wireless tag and the antenna increases.

Optionally, in the wireless tag reading device according to the first aspect of the invention, the antenna is further configured to send a carrier wave to the wireless tag.

Optionally, in the wireless tag reading device according to the first aspect of the invention, the processor is further configured to determine a phase difference between the phase of the response wave and a phase of the carrier wave.

According to a second aspect of the invention, it is provided a method for reading a wireless tag by a processor, comprising: receiving a response wave from a wireless tag through an antenna; acquiring identification information from the wireless tag from the response wave; determining a relative movement direction of the wireless tag and the antenna based on a phase of the response wave; and storing identification information for identifying the wireless tag in a storage section if the movement direction is a first direction.

Optionally, in the method according to the second aspect of the invention, if the movement direction is a second direction different from the first direction, deleting the identification information for identifying the wireless tag from the storage section.

Optionally, the method according to the second aspect of the invention further comprises conveying the wireless tag in the first direction.

Optionally, the method according to the second aspect of the invention further comprises conveying the wireless tag in the first direction.

Optionally, in the method according to the second aspect of the invention, the first direction is a direction in which the wireless tag and the antenna approach each other.

Optionally, in the method according to the second aspect of the invention, the first direction is a direction in which a distance between the wireless tag and the antenna decreases.

Optionally, in the method according to the second aspect of the invention, the second direction is a direction in which a distance between the wireless tag and the antenna increases.

Optionally, the method according to the second aspect of the invention further comprises sending a carrier wave to the wireless tag.

Optionally, the method according to the second aspect of the invention further comprises determining a phase difference between the phase of the response wave and a phase of the carrier wave.

According to a third aspect of the invention, it is provided a wireless tag reading device, comprising: an antenna configured to send a carrier wave to a wireless tag and receive a response wave from the wireless tag; a reader configured to acquire identification information from the wireless tag from the response wave; a processor configured to determine a relative movement direction of the wireless tag and the antenna based on a phase difference between a phase of the carrier wave and a phase of the response wave; and a storage section configured to store identification information for identifying the wireless tag if the movement direction is a first direction.

### DESCRIPTION OF THE DRAWINGS

Fig. 1 is a diagram schematically illustrating a configuration of a wireless tag reading device according to a first embodiment;
Fig. 2 is a block diagram illustrating a configuration of the wireless tag reading device according to the first embodiment;
Fig. 3 is a graph illustrating a relationship between a position of the wireless tag and a phase difference according to the first embodiment;
Fig. 4 is a flowchart depicting an operation performed by the wireless tag reading device according to the first embodiment; and
Fig. 5 is a flowchart depicting an operation performed by a wireless tag reading device according to a second embodiment.

### DETAILED DESCRIPTION

In accordance with an embodiment, a wireless tag reading device comprises an antenna configured to receive a response wave from a wireless tag; a reader configured to acquire identification information from the wireless tag from the response wave; a processor configured to determine a relative movement direction of the wireless tag and the antenna based on a phase of the response wave; and a storage section configured to store identification information for identifying the wireless tag if the movement direction is a first direction.

Hereinafter, several embodiments are described with reference to the accompanying drawings.

### (First Embodiment)

First, the first embodiment is described.

A wireless tag reading device according to the embodiment wirelessly reads a wireless tag attached to an article or the like. The wireless tag reading device reads the wireless tag located within a predetermined area. For example, the wireless tag reading device reads the wireless tag from an article in a container such as a basket. For example, the wireless tag reading device reads a wireless tag attached to an article for inventory work or the like. The wireless tag reading device may read the wireless tag to perform settlement on the article.

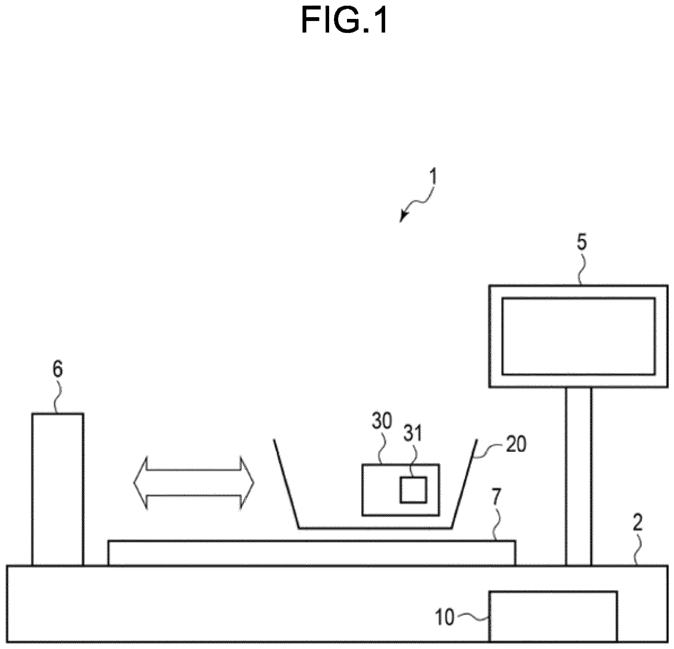

Fig. 1 is a diagram schematically illustrating an external appearance of a wireless tag reading device 1 according to the embodiment. As shown in Fig. 1, the wireless tag reading device 1 includes a housing 2, an input/output device 5, an antenna 6, a conveyance mechanism 7 and a controller 10.

The housing 2 forms an external shape of the wireless tag reading device 1. In the example shown in Fig. 1, the housing 2 has a rectangular shape.

The input/output device 5 is arranged on the housing 2. In the example shown in Fig. 1, the input/output device 5 is placed at a tip of a shaft extending from the housing 2.

The input/output device 5 receives an input of an instruction from an operator and displays various kinds of information to the operator. The input/output device 5 includes an operation section that receives the input of the instruction and a display section that displays the information.

The operation section of the input/output device 5 transmits a signal indicating an operation received from the operator to the controller 10. Here, the operation section is a touch panel. The operation section may further include a keyboard or a numeric key.

The display section of the input/output device 5 displays an image from the controller 10. For example, the display section is a liquid crystal monitor. The display section is integrally formed with the touch panel serving as the operation section.

The antenna 6 is an antenna through which the controller 10 wirelessly communicates with a wireless tag. For example, the antenna 6 is arranged at a position where it can communicate with a wireless tag attached to an article placed on the conveyance mechanism 7. In the example shown in Fig. 1, the antenna 6 is formed at a predetermined height and is adjacent to one end of the conveyance mechanism 7. Specifically, the antenna 6 is formed upright at a left side of the housing 2. The antenna 6 may be a directional antenna having directivity in a direction towards the conveyance mechanism 7.

The antenna 6 transmits a carrier wave to the wireless tag under the control of the controller 10. The antenna 6 receives a response wave from the wireless tag and converts the response wave to an electrical signal. The antenna 6 supplies the converted electrical signal to the controller 10.

The conveyance mechanism 7 conveys the article to which the wireless tag is attached in a direction of approaching the antenna 6 and in a direction of moving away from the antenna 6 under the control of the controller 10. The conveyance mechanism 7 is adjacent to the antenna 6 on the housing 2. In the example shown in Fig. 1, the conveyance mechanism 7 is formed on a right side of the antenna 6.

Here, a container 20 for storing an article 30 is placed on the conveyance mechanism 7. The container 20 is, for example, a basket or the like. One wireless tag 31 is attached to the article 30.

The conveyance mechanism 7 conveys the container 20 to convey the wireless tag 31.

For example, the conveyance mechanism 7 includes a conveyance belt on which the container 20 is placed and a motor for driving the conveyance belt. The conveyance mechanism 7 drives a motor to drive the conveyance belt. The conveyance mechanism 7 drives the conveyance belt to convey the container 20 on the conveyance belt.

The configuration of the conveyance mechanism 7 is not limited to a specific configuration.

The controller 10 controls the entire wireless tag reading device 1. The controller 10 is described below.

Next, the wireless tag 31 is described.

The wireless tag 31 transmits and receives data wirelessly to and from the antenna 6. The wireless tag 31 receives electric power wirelessly supplied from the antenna 6 to be activated. Specifically, the wireless tag 31 receives the carrier wave from the antenna 6 and converts the carrier wave to the electric power. The wireless tag 31 is activated by the electric power generated by converting the carrier wave. The wireless tag 31 transmits a response wave generated by modulating the carrier wave to the antenna 6.

The wireless tag 31 returns identification information (for example, an EPC (Electronic Product Code)) for identifying the wireless tag 31 itself in response to a request from the controller 10. Specifically, the wireless tag 31 extracts a request from the carrier wave. The wireless tag 31 transmits a response wave indicating an identifier to the antenna 6 as a response to the request.

The wireless tag 31 includes, for example, a control section and an antenna. The wireless tag 31 is, for example, an RFID (Radio Frequency Identification).

The container 20 may store a plurality of articles 30. In this case, each article 30 is attached with one wireless tag 31.

Next, a configuration of a control system of the wireless tag reading device 1 is described.

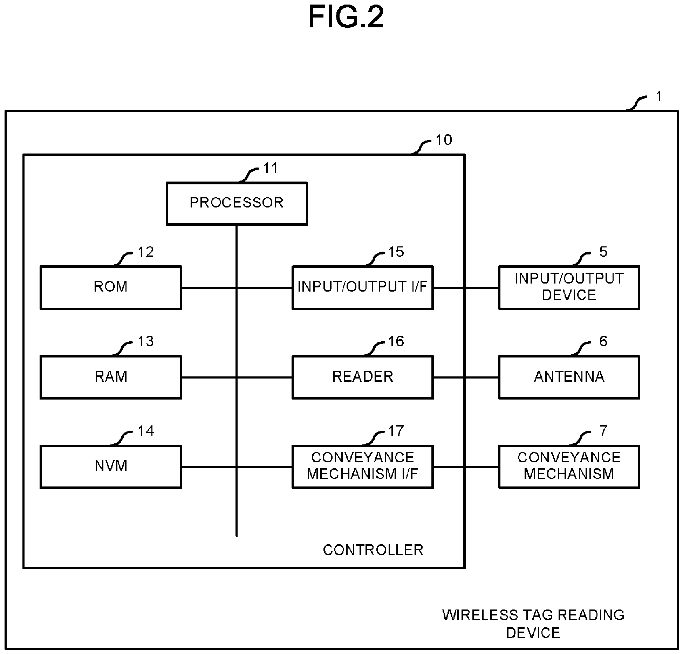

Fig. 2 is a block diagram illustrating a configuration of a control system of the wireless tag reading device 1. As shown in Fig. 2, the wireless tag reading device 1 includes the input/output device 5, the antenna 6, the conveyance mechanism 7 and the controller 10. The controller 10 includes a processor 11, a ROM (Read Only Memory) 12, a RAM (Random Access Memory) 13, an NVM (Non-Volatile Memory) 14, an input/output interface 15, a reader 16 and a conveyance mechanism interface 17.

The processor 11 is connected to the ROM 12, the RAM 13, the NVM 14, the input/output interface 15, the reader 16 and the conveyance mechanism interface 17. The input/output interface 15 is connected to the input/output device 5. The reader 16 is connected to the antenna 6. The conveyance mechanism interface 17 is connected to the conveyance mechanism 7.

The wireless tag reading device 1 may further include a component as necessary in addition to the components shown in Fig. 2, or may exclude a specific component from the wireless tag reading device 1.

The input/output device 5, the antenna 6 and the conveyance mechanism 7 are as described above.

The processor 11 has a function of controlling the entire operation of the wireless tag reading device 1. The processor 11 may include an internal cache, various interfaces and the like. The processor 11 performs various processing by executing programs stored in advance in the internal memory, the ROM 12 or the NVM 14.

A part of various functions performed by the processor 11 executing programs may be performed by a hardware circuit. In this case, the processor 11 controls the functions performed by the hardware circuit.

The ROM 12 is a non-volatile memory for storing a control program and control data in advance. The control program and the control data stored in the ROM 12 are incorporated in advance according to a specification of the wireless tag reading device 1. For example, the ROM 12 stores a program for controlling a circuit board of the wireless tag reading device 1.

The RAM 13 is a volatile memory. The RAM 13 temporarily stores data being processed by the processor 11. The RAM 13 stores various application programs based on an instruction from the processor 11. The RAM 13 may store data necessary for executing the application program, an execution result of the application program, and the like.

The NVM 14 (storage section) is a non-volatile memory in which data can be written and rewritten. The NVM 14 is, for example, an HDD (Hard Disk Drive), an SSD (Solid State Drive), a flash memory, or the like. The NVM 14 stores a control program, an application and various kinds of data according to the use of the wireless tag reading device 1.

The input/output interface 15 is used for transmitting and receiving data to and from the input/output device 5. For example, the input/output interface 15 receives a signal indicating an operation received from a user from the input/output device 5. The input/output interface 15 transmits the received signal to the processor 11. The input/output interface 15 transmits information indicating a screen to be displayed to the user to the input/output device 5 under the control of the processor 11. For example, the input/output interface 15 may support USB (Universal Serial Bus) connection or may support parallel interface connection.

The reader 16 wirelessly communicates with the wireless tag 31 through the antenna 6 under the control of the processor 11. For example, the reader 16 radiates an unmodulated wave as the carrier wave through the antenna 6. The reader 16 receives the response wave responding to the carrier wave from the wireless tag 31 through the antenna 6 and then demodulates the received response wave. The reader 16 acquires data from the wireless tag 31 by demodulating the response wave. The reader 16 transmits the acquired data to the processor 11.

For example, the reader 16 acquires the identification information from the wireless tag 31 and transmits the acquired identification information to the processor 11.

The reader 16 acquires a phase of the response wave. Here, the reader 16 acquires a phase difference between the carrier wave and the response wave. For example, the reader 16 measures a phase difference by enabling the carrier wave and the response wave to interfere with each other. The reader 16 transmits the measured phase difference to the processor 11.

Here, the reader 16 transmits and receives data to and from the wireless tag 31 present on the conveyance mechanism 7. Specifically, the reader 16 radiates the carrier wave from the antenna 6, which is an output that can be transmitted to the wireless tag 31 present on the conveyance mechanism 7. The reader 16 receives the response wave from the wireless tag 31 present on the conveyance mechanism 7 through the antenna 6.

The conveyance mechanism interface 17 is used for transmitting and receiving data to and from the conveyance mechanism 7. The conveyance mechanism interface 17 transmits a signal for driving the conveyance mechanism 7 to the conveyance mechanism 7 under the control of the processor 11. For example, the conveyance mechanism interface 17 transmits a signal for instructing conveyance or stop to the conveyance mechanism 7. The conveyance mechanism interface 17 may supply the electric power to the conveyance mechanism 7. For example, the conveyance mechanism interface 17 may support USB connection or may support parallel interface connection.

Next, the functions of the wireless tag reading device 1 are described. The functions of the wireless tag reading device 1 are performed by the processor 11 executing programs stored in the ROM 12 or the NVM 14.

First, the processor 11 has a function of conveying the wireless tag 31 in a direction in which the wireless tag 31 conveyed by the conveyance mechanism 7 approaches the antenna 6 (i.e., an approaching direction or a first direction).

Here, the operator places the container 20 storing the article 30 at a predetermined position away from the antenna 6 by a predetermined distance on the conveyance mechanism 7.

The processor 11 determines whether to start reading the wireless tag 31 in the container 20. For example, the processor 11 determines whether an input of an operation to start reading the wireless tag 31 is received through the input/output device 5. The processor 11 may determine to start reading the wireless tag 31 if it is detected that the container 20 is placed on the conveyance mechanism 7.

If the processor 11 determines to start reading the wireless tag 31 in the container 20, the processor 11 controls the conveyance mechanism 7 to convey the container 20 from the predetermined position in the approaching direction. For example, the processor 11 transmits a signal for instructing to convey the container 20 in the approaching direction through the conveyance mechanism interface 17.

The processor 11 conveys the container 20 in the approaching direction to convey the wireless tag 31 in the container 20 in the approaching direction.

The processor 11 conveys the container 20 to a predetermined position.

The processor 11 has a function of acquiring the phase of the response wave from the wireless tag 31 and the identification information indicated by the response wave.

Here, the processor 11 controls the reader 16 to transmit the carrier wave from the antenna 6. The wireless tag 31 transmits a response wave generated by modulating the carrier wave to the antenna 6.

The reader 16 receives the response wave from the wireless tag 31 through the antenna 6. The reader 16 acquires the phase of the response wave. Specifically, the reader 16 acquires a phase difference between the carrier wave and the response wave. The reader 16 transmits the acquired phase difference to the processor 11.

The processor 11 acquires a phase difference from the reader 16 as the phase of the response wave.

The processor 11 controls the reader 16 to demodulate the response wave to acquire the identification information.

The processor 11 has a function of determining a relative movement direction of the wireless tag 31 and the antenna 6 based on the phase of the response wave.

Specifically, the processor 11 determines whether the wireless tag 31 approaches or moves away from the antenna 6.

The processor 11 determines a movement direction of the wireless tag 31 based on a displacement of the phase difference between the carrier wave and the response wave.

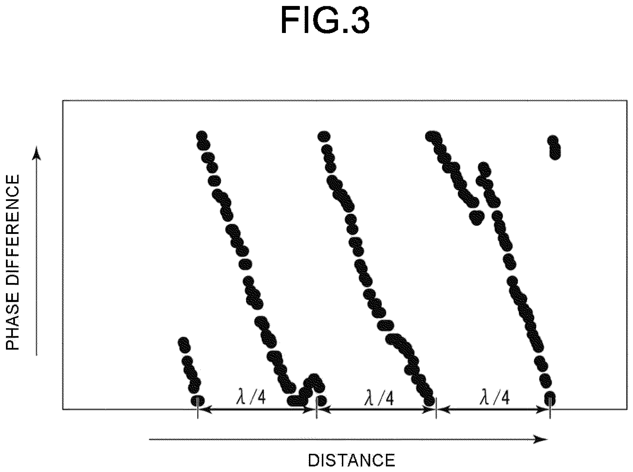

Fig. 3 is a graph illustrating a relationship between the phase difference and the position of the wireless tag 31. The X axis indicates a relative distance between the antenna 6 and the wireless tag 31. The Y-axis indicates the phase difference.

As shown in Fig. 3, as the relative distance between the antenna 6 and the wireless tag 31 increases, the phase difference decreases. Conversely, as the relative distance between the antenna 6 and the wireless tag 31 decreases, the phase difference increases.

The phase difference has the same value in a predetermined cycle. In the example shown in Fig. 3, a value of the phase difference cycles each time the relative distance is increased by λ/4. The value of the phase difference is within a range from 0 to a predetermined value (here, 180 degrees). Specifically, the value of the phase difference shifts from 0 to 180 each time the relative distance is increased by λ/4.

The processor 11 uses the above characteristics to determine the direction in which the wireless tag 31 is moved. Specifically, the processor 11 acquires a plurality of phase differences in time series. The processor 11 determines that the wireless tag 31 is moved in the approaching direction if the phase difference increases. The processor 11 determines that the wireless tag 31 is moved in the direction in which the wireless tag 31 is moved away from the antenna 6 (i.e., a direction different from the approaching direction, a separation direction, or a second direction) if the phase difference decreases.

The processor 11 determines the movement direction of the wireless tag 31 based on the direction in which the phase difference is displaced if the phase difference is discontinuously displaced. For example, the processor 11 determines that the wireless tag 31 is moved in the approaching direction if the phase difference is discontinuously displaced from around 180 degrees to around 0 degrees. The processor 11 determines that the wireless tag 31 is moved in the separation direction if the phase difference is discontinuously displaced from around 0 degrees to around 180 degrees.

The method by which the processor 11 determines the movement direction from the phase of the response wave is not limited to a particular method.

The processor 11 has a function of storing the identification information for identifying the wireless tag 31 moving in the approaching direction in a predetermined storage area (i.e. a registration area).

The processor 11 determines whether the wireless tag 31 is moved by a predetermined distance in the approaching direction. For example, the predetermined distance is shorter than a distance by which the wireless tag 31 is moved in the approaching direction by the conveyance mechanism 7. The processor 11 determines whether the wireless tag 31 is moved by a predetermined distance in the approaching direction from a time point at which the response wave from the wireless tag 31 is received. For example, the processor 11 determines a movement distance (i.e., a movement distance from a position at the time point the response wave is received) of the wireless tag 31 based on the displacement of the phase difference. The processor 11 determines whether the movement distance of the wireless tag 31 reaches a predetermined threshold value.

The processor 11 stores the identification information for identifying the wireless tag 31 moved in the approaching direction by the predetermined distance in the registration area. For example, the registration area is formed in the RAM 13 or the NVM 14. For example, the registration area stores the identification information of the desired wireless tag 31.

The processor 11 may display the identification information stored in the registration area on the input/output device 5. The processor 11 may display information indicating an article corresponding to the identification information (e.g., the article 30 to which the wireless tag 31 is attached) on the input/output device 5.

The processor 11 may store the identification information for identifying the wireless tag 31 moved in the approaching direction in the registration area while the container 20 is conveyed by the conveyance mechanism 7. The processor 11 may store the identification information for identifying the wireless tag 31 moved in the approaching direction in the registration area even after the container 20 is conveyed by the conveyance mechanism 7 to the predetermined position.

The processor 11 has a function of deleting the identification information for identifying the wireless tag 31 moved in the separation direction from the registration area.

Here, the operator takes out the wireless tag 31 whose identification information is desired to be deleted from the registration area from the container 20 after the container 20 is conveyed by the conveyance mechanism 7 to the predetermined position. Specifically, the operator separates the wireless tag 31 whose identification information is desired to be deleted from the registration area from the antenna 6. For example, the operator takes the article 30 out of the container 20 to separate the article 30 from the antenna 6.

The processor 11 determines whether the wireless tag 31 is moved in the separation direction by a predetermined distance . The processor 11 determines whether the wireless tag 31 is moved in the separation direction by a predetermined distance from a time point at which the identification information for identifying the wireless tag 31 is stored in the registration area. For example, the processor 11 determines the movement distance of the wireless tag 31 (i.e., the movement distance from the time point at which the identification information is stored in the registration area) based on the displacement of the phase difference. The processor 11 determines whether the movement distance of the wireless tag 31 reaches a predetermined threshold value.

The processor 11 deletes the identification information for identifying the wireless tag 31 moved by the predetermined distance in the separation direction from the registration area.

The processor 11 may delete the identification information deleted from the registration area from the display on the input/output device 5. The processor 11 may delete the information indicating an article corresponding to the deleted identification information (e.g., the article 30 to which the wireless tag 31 is attached) from the display on the input/output device 5.

The processor 11 may delete the identification information for identifying the wireless tag 31 moved in the separation direction from the registration area after the container 20 is conveyed by the conveyance mechanism 7 to the predetermined position.

Next, an operation performed by the wireless tag reading device 1 is described.

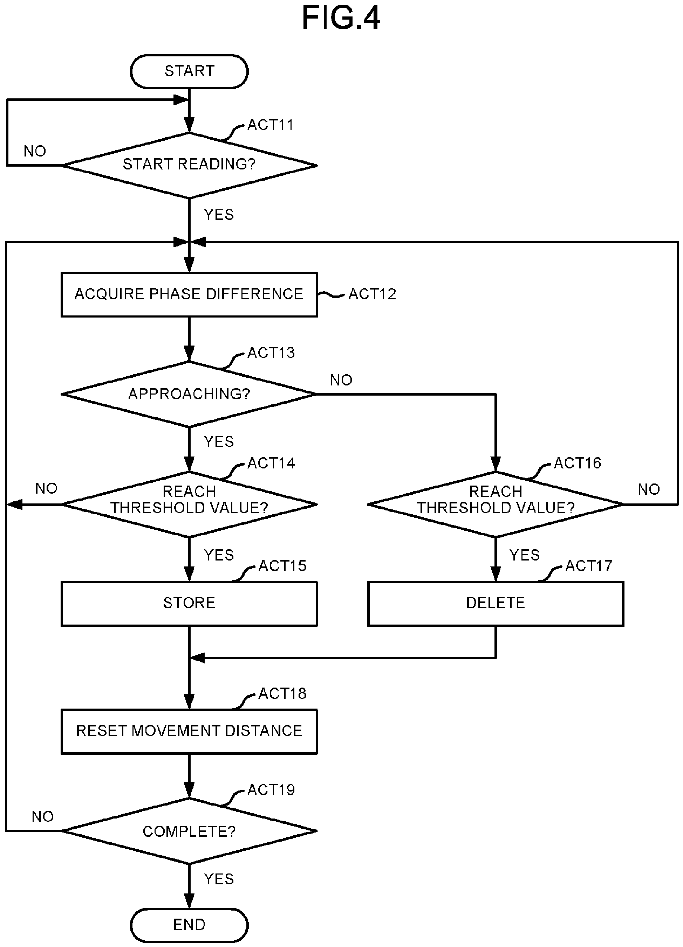

Fig. 4 is a flowchart depicting an operation performed by the wireless tag reading device 1.

Here, the operator places the container 20 for storing the article 30 to which the wireless tag 31 is attached on the conveyance mechanism 7.

First, the processor 11 of the wireless tag reading device 1 determines whether to start reading the wireless tag 31 (ACT 11). If the processor 11 determines not to start reading the wireless tag 31 (No in ACT 11), the processor 11 returns to the processing in ACT 11.

If the processor 11 determines to start reading the wireless tag 31 (Yes in ACT 11), the processor 11 acquires the phase difference between the carrier wave and the response wave (ACT 12) . Here, the processor 11 starts conveying the container 20 in the approaching direction.

After the phase difference is acquired, the processor 11 determines whether the wireless tag 31 is moved in the approaching direction (ACT 13). If it is determined that the wireless tag 31 is moved in the approaching direction (Yes in ACT 13), the processor 11 determines whether the movement distance of the wireless tag 31 reaches a predetermined threshold value (ACT 14).

If it is determined that the movement distance of the wireless tag 31 reaches the predetermined threshold value (Yes in ACT 14), the processor 11 stores the identification information for identifying the wireless tag 31 in the registration area (ACT 15).

If it is determined that the wireless tag 31 is moved in the separation direction (No in ACT 13), the processor 11 determines whether the movement distance of the wireless tag 31 reaches a predetermined threshold value (ACT 16).

If it is determined that the movement distance of the wireless tag 31 reaches the predetermined threshold value (Yes in ACT 16), the processor 11 deletes the identification information for identifying the wireless tag 31 from the registration area (ACT 17).

If the identification information for identifying the wireless tag 31 is stored in the registration area (ACT 15), or if the identification information for identifying the wireless tag 31 is deleted from the registration area (ACT 17), the processor 11 resets the movement distance (ACT 18).

After the movement distance is reset, the processor 11 determines whether the reading of the wireless tag 31 is completed (ACT 19). For example, the processor 11 determines whether an input of an operation for completing the reading of the wireless tag 31 is received through the input/output device 5.

If it is determined that the movement distance of the wireless tag 31 does not reach the predetermined threshold value (No in ACT 14), if it is determined that the movement distance of the wireless tag 31 does not reach the predetermined threshold value (No in ACT 16), or if it is determined that the reading of the wireless tag 31 is not completed (No in ACT 19), the processor 11 returns to the processing in ACT 12.

If it is determined that the reading of the wireless tag 31 is completed (Yes in ACT 19), the processor 11 terminates the operation.

The processor 11 terminates conveyance of the container 20 if the container 20 is conveyed to the predetermined position.

The processor 11 may transmit the identification information stored in the registration area to an external device after terminating the operation. The processor 11 may store the identification information stored in the registration area in a predetermined storage area. The processor 11 may perform a settlement operation on an article corresponding to the identification information stored in the registration area.

The wireless tag reading device 1 may not have the conveyance mechanism 7. In this case, the operator moves the container 20 from the predetermined position in the approaching direction.

The wireless tag reading device 1 may include a conveyance mechanism for conveying the antenna 6. In this case, the processor 11 conveys the antenna 6 in a direction of approaching the container 20 (approaching direction).

The wireless tag reading device configured as described above moves the wireless tag to be read in the direction of approaching the antenna. The wireless tag reading device determines a direction in which the wireless tag is moved relative to the antenna based on the phase of the response wave from the wireless tag. The wireless tag reading device stores the identification information for identifying the wireless tag in the registration area if the wireless tag is moved in a direction of approaching the antenna. As a result, the wireless tag reading device can specify a wireless tag to be read from the wireless tags located within a range in which the communication between the antenna and the wireless tag is enabled, and acquire the identification information for identifying the wireless tag.

The wireless tag reading device deletes the identification information for identifying the wireless tag from the registration area if the wireless tag is moved in the direction of moving away from the antenna. As a result, the wireless tag reading device can specify a wireless tag determined to be unnecessary by the operator, and exclude the identification information for identifying the wireless tag.

### (Second Embodiment)

Next, the second embodiment is described.

The wireless tag reading device 1 according to the second embodiment differs from that according to the first embodiment in that it stores the identification information for identifying the wireless tag in the registration area if the wireless tag is moved in the separation direction. Therefore, the same components as those of the first embodiment are denoted with the same reference numerals, and the detailed description thereof is omitted.

The configuration of the wireless tag reading device 1 according to the second embodiment is the same as that of the wireless tag reading device 1 according to the first embodiment, and therefore the description thereof is omitted.

Next, the functions of the wireless tag reading device 1 are described. The functions of the wireless tag reading device 1 are performed by the processor 11 executing programs stored in the ROM 12 or the NVM 14.

The processor 11 performs the following functions in addition to the functions according to the first embodiment.

First, the processor 11 has a function of conveying the wireless tag 31 in a direction of moving away from the antenna 6 (i.e., a separation direction, or a first direction in the second embodiment) with the conveyance mechanism 7.

Here, the operator places the container 20 storing the article 30 at a predetermined position close to the antenna 6 on the conveyance mechanism 7.

The processor 11 determines whether to start reading the wireless tag 31 in the container 20. For example, the processor 11 determines whether the input of the operation to start reading the wireless tag 31 is received through the input/output device 5. The processor 11 may determine to start reading the wireless tag 31 if it is detected that the container 20 is placed on the conveyance mechanism 7.

If the processor 11 determines to start reading the wireless tag 31 in the container 20, the processor 11 conveys the container 20 from a predetermined position in the separation direction with the conveyance mechanism 7. For example, the processor 11 transmits a signal for instructing to convey the container 20 in the separation direction through the conveyance mechanism interface 17.

The processor 11 conveys the container 20 in the separation direction to convey the wireless tag 31 in the container 20 in the separation direction.

The processor 11 conveys the container 20 to a predetermined position.

The processor 11 has a function of storing the identification information for identifying the wireless tag 31 moved in the separation direction in the registration area.

The processor 11 determines whether the wireless tag 31 is moved by a predetermined distance in the separation direction . For example, the predetermined distance is shorter than the distance by which the wireless tag 31 is moved by the conveyance mechanism 7 in the separation direction. The processor 11 determines whether the wireless tag 31 is moved by the predetermined distance in the separation direction from the time point at which the response wave from the wireless tag 31 is received. For example, the processor 11 determines a movement distance (i.e., a movement distance from a position at the time point the response wave is received) of the wireless tag 31 based on the displacement of the phase difference. The processor 11 determines whether the movement distance of the wireless tag 31 reaches a predetermined threshold value.

The processor 11 stores the identification information for identifying the wireless tag 31 moved in the separation direction by the predetermined distance in the registration area.

The processor 11 may display the identification information stored in the registration area on the input/output device 5. The processor 11 may display information indicating an article corresponding to the identification information (e.g., the article 30 to which the wireless tag 31 is attached) on the input/output device 5.

The processor 11 may store the identification information for identifying the wireless tag 31 moved in the separation direction in the registration area while the container 20 is conveyed by the conveyance mechanism 7. The processor 11 may store the identification information for identifying the wireless tag 31 moved in the separation direction in the registration area even after the container 20 is conveyed by the conveyance mechanism 7 to the predetermined position.

The processor 11 has a function of deleting the identification information for identifying the wireless tag 31 moved in the approaching direction (i.e., a second direction in the second embodiment) from the registration area.

Here, the operator takes out the wireless tag 31 whose identification information is desired to be deleted from the registration area from the container 20 and brings the wireless tag 31 close to the antenna 6 after the container 20 is conveyed by the conveyance mechanism 7 to the predetermined position. For example, the operator takes the article 30 out of the container 20 to bring the article 30 close to the antenna 6.

The processor 11 determines whether the wireless tag 31 is moved in the approaching direction by a predetermined distance. The processor 11 determines whether the wireless tag 31 is moved in the approaching direction by a predetermined distance from a time point at which the identification information for identifying the wireless tag 31 is stored in the registration area. For example, the processor 11 determines the movement distance of the wireless tag 31 (i.e., the movement distance from the time point at which the identification information is stored in the registration area) based on the displacement of the phase difference. The processor 11 determines whether the movement distance of the wireless tag 31 reaches a predetermined threshold value.

The processor 11 deletes the identification information for identifying the wireless tag 31 moved by the predetermined distance in the approaching direction from the registration area.

The processor 11 may delete the identification information deleted from the registration area from the display on the input/output device 5. The processor 11 may delete the information indicating an article corresponding to the deleted identification information (e.g., the article 30 to which the wireless tag 31 is attached) from the display on the input/output device 5.

Next, an operation performed by the wireless tag reading device 1 is described.

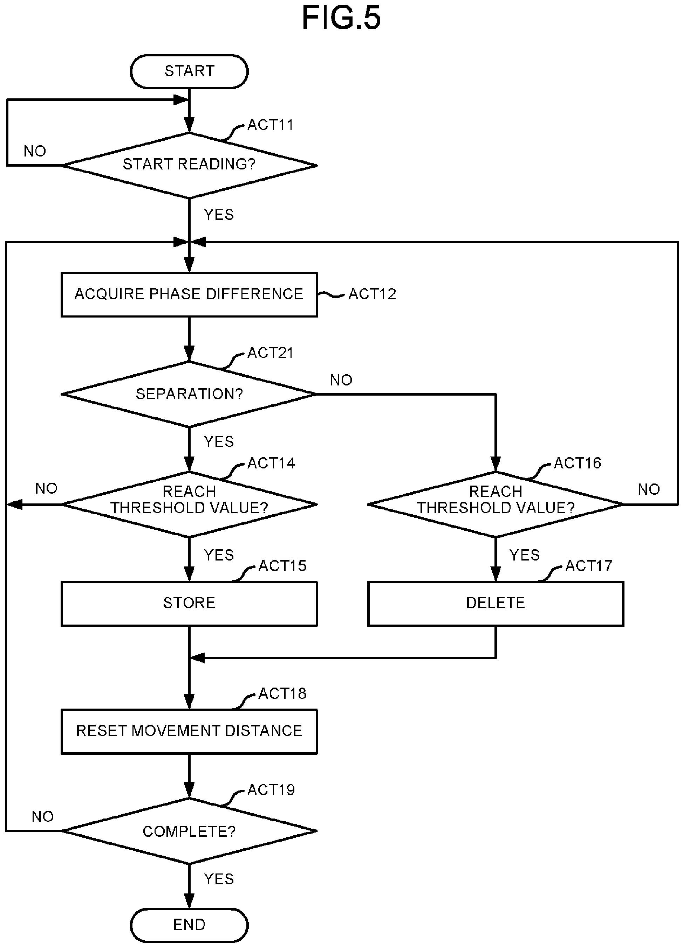

Fig. 5 is a flowchart depicting an operation performed by the wireless tag reading device 1. The operations the same as those in the first embodiment are denoted with the same reference symbols, and the detailed description thereof is omitted.

The operator places the container 20 for storing the article 30 to which the wireless tag 31 is attached on the conveyance mechanism 7.

If the processor 11 determines to start reading the wireless tag 31 (Yes in ACT 11), the processor 11 starts to convey the container 20 in the separation direction.

If the phase difference is acquired (ACT 12), the processor 11 determines whether the wireless tag 31 is moved in the separation direction (ACT 21). If it is determined that the wireless tag 31 is moved in the separation direction (Yes in ACT 21), the processor 11 determines whether the movement distance of the wireless tag 31 reaches a predetermined threshold value (ACT 14).

If it is determined that the wireless tag 31 is moved in the approaching direction (No in ACT 21), the processor 11 determines whether the movement distance of the wireless tag 31 reaches a predetermined threshold value (ACT 16).

The processor 11 terminates the conveyance of the container 20 if the container 20 is conveyed to the predetermined position.

The wireless tag reading device 1 may not have the conveyance mechanism 7. In this case, the operator moves the container 20 from the predetermined position in the separation direction.

The wireless tag reading device 1 may include a conveyance mechanism that conveys the antenna 6. In this case, the processor 11 conveys the antenna 6 in the direction of moving away from the container 20 (i.e., the separation direction).

The wireless tag reading device configured as described above moves the wireless tag to be read away from the antenna. The wireless tag reading device determines a movement direction of the wireless tag relative to the antenna based on the phase of the response wave from the wireless tag. The wireless tag reading device stores the identification information for identifying the wireless tag in the registration area if the wireless tag is moved in the direction of moving away from the antenna. As a result, the wireless tag reading device can specify the wireless tag moved in the direction of moving away from the antenna as the wireless tag desired to be read.

The wireless tag reading device deletes the identification information for identifying the wireless tag from the registration area if the wireless tag is moved in the direction of approaching the antenna. As a result, the wireless tag reading device can specify the wireless tag moving in the direction of approaching the antenna as the wireless tag determined to be unnecessary by the operator.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the scope of the invention. The accompanying claims and their equivalents are intended to cover such forms or modifications as would fall within the scope of the invention as defined by the appended claims.

## Claims

1. A wireless tag reading device, comprising:
an antenna configured to receive a response wave from a wireless tag;
a reader configured to acquire identification information from the wireless tag from the response wave;
a processor configured to determine a relative movement direction of the wireless tag and the antenna based on a phase of the response wave; and
a storage section configured to store identification information for identifying the wireless tag if the movement direction is a first direction.

2. The wireless tag reading device according to claim 1, wherein
if the movement direction is a second direction different from the first direction, the processor deletes the identification information for identifying the wireless tag from the storage section.

3. The wireless tag reading device according to claim 1 or 2, further comprising:
a conveyance mechanism configured to convey the wireless tag in the first direction.

4. The wireless tag reading device according to any of claims 1 to 3, wherein
the first direction is a direction in which the wireless tag and the antenna approach each other.

5. The wireless tag reading device according to any of claims 1 to 5, wherein
the antenna is a directional antenna having directivity in a direction towards the conveyance mechanism.

6. The wireless tag reading device according to any of claims 1 to 5, wherein
the first direction is a direction in which a distance between the wireless tag and the antenna decreases.

7. The wireless tag reading device according to any of claims 1 to 6, wherein
the second direction is a direction in which a distance between the wireless tag and the antenna increases.

8. The wireless tag reading device according to any of claims 1 to 7, wherein
the antenna is further configured to send a carrier wave to the wireless tag.

9. The wireless tag reading device according to claim 9, wherein
the processor is further configured to determine a phase difference between the phase of the response wave and a phase of the carrier wave.

10. A method for reading a wireless tag by a processor, comprising:
receiving a response wave from a wireless tag through an antenna;
acquiring identification information from the wireless tag from the response wave;
determining a relative movement direction of the wireless tag and the antenna based on a phase of the response wave; and
storing identification information for identifying the wireless tag in a storage section if the movement direction is a first direction.

11. The method according to claim 10, wherein
if the movement direction is a second direction different from the first direction, deleting the identification information for identifying the wireless tag from the storage section.

12. The method according to claim 10 or 11, further comprising:
conveying the wireless tag in the first direction.

13. The method according to any of claims 10 to 12, wherein
the first direction is preferably a direction in which a distance between the wireless tag and the antenna decreases, wherein
the second direction is preferably a direction in which a distance between the wireless tag and the antenna increases.

14. The method according to any of claims 10 to 13, further comprising:
sending a carrier wave to the wireless tag, the method preferably further comprising:
determining a phase difference between the phase of the response wave and a phase of the carrier wave.

15. A wireless tag reading device, comprising:
an antenna configured to send a carrier wave to a wireless tag and receive a response wave from the wireless tag;
a reader configured to acquire identification information from the wireless tag from the response wave;
a processor configured to determine a relative movement direction of the wireless tag and the antenna based on a phase difference between a phase of the carrier wave and a phase of the response wave; and
a storage section configured to store identification information for identifying the wireless tag if the movement direction is a first direction.
